# FASCICULE DE BREVET EUROPEEN

(11) **EP 1 096 721 B1**
(45) Date de publication et mention de la délivrance du brevet: **13.08.2008**
(21) Numéro de dépôt: 00402951.8
(22) Date de dépôt: 25.10.2000
(51) Int. Cl.: H04L 9/30, H04L 9/32

(54) **Procédé de renouvellement, par une autorité de certification, de cles de confidentialité détenues par un abonné**
Verfahren zur Erneuerung von einem Teilnehmer benutzten Geheimschlüssel mittels einer Zertifizierungsinstanz
Method for updating confidential keys held by a subscriber using a certification authority

(30) Priorité: 27.10.1999 FR 9913426
(43) Date de publication de la demande: 02.05.2001
(73) Titulaire: SAGEM Défense Sécurité, 75015 Paris (FR)
(72) Inventeur: Chabanne, Hervé, 78200 Mantes la Jolie (FR); Courquin, Yannick, 95550 Bessancourt (FR)
(74) Mandataire: Gorrée, Jean-Michel

(56) Documents cités:
- US-A- 5 412 726
- US-A- 5 796 833

## Description

La présente invention concerne le domaine général de l'échange d'informations effectué, par des abonnés entre eux et/ou avec une Autorité de Certification, sous couvert de couples de clés de confidentialité (clé publique et clé privée) et de couples de clés de signature (clé publique et clé privée) . Les clés de confidentialité sont détenues par chaque abonné et par l'Autorité de Certification.

Le document D1 US 5 796 833 décrit un procédé de génération de clé résistant aux attaques malicieuses.

L'invention en outre se situe dans le contexte où l'Autorité de Certification assure également le service de recouvrement, c'est-à-dire qu'elle garde le contrôle des clés privées des abonnés en les engendrant lorsque cela est nécessaire.

De plus, dans ce contexte, il est prévu que toutes les communications entre chaque abonné et l'Autorité de Certification sont chiffrées (clés de confidentialité) et signées (clés de signature) dans l'un et l'autre sens et que chaque clé publique est insérée dans un certificat émis par l'Autorité de Certification.

Plus précisément, l'invention vise le processus de renouvellement, par une Autorité de Certification, des clés de confidentialité d'un abonné qui détient deux clés (respectivement publique et privée) de confidentialité et deux clés (respectivement publique et privée) de signature qui lui ont été attribuées par ladite Autorité de Certification, laquelle dispose en outre de ses propres couples de clés (publique et privée) de confidentialité et de signature, une clé publique de confidentialité ne pouvant être transmise qu'insérée dans un certificat.

Le problème du renouvellement des clés de confidentialité d'un abonné se pose lorsque la clé privée n'est plus sûre, par exemple à la suite d'une compromission.

Jusqu'à présent, c'est l'ancienne clé de confidentialité qui était utilisée pour assurer le renouvellement, c'est-à-dire pour sécuriser la demande de renouvellement de l'abonné auprès de l'Autorité de Certification, puis, après émission de la nouvelle clé par celle-ci, le transfert de cette nouvelle clé jusqu'à l'abonné. Une telle manière de procéder posait un problème lorsque l'ancienne clé était compromise, alors que le cas d'une compromission est un des cas (mais non pas le seul) nécessitant un renouvellement.

L'invention a précisément pour but de remédier à ce problème et de proposer une démarche opératoire propre à assurer le secret de la clé privée de confidentialité au cours de son transfert depuis l'Autorité de Certification jusqu'à l'abonné, dans tous les cas y compris dans le cas où l'ancienne clé a été compromise.

A cette fin, l'invention propose un procédé de renouvellement, par une Autorité de Certification, des clés de confidentialité d'un abonné qui détient deux clés (respectivement publique et privée) de confidentialité et deux clés (respectivement publique et privée) de signature qui lui ont été attribuées par ladite Autorité de Certification, laquelle dispose en outre de ses propres couples de clés (publique et privée) de confidentialité et de signature, une clé publique ne pouvant être transmise qu'insérée dans un certificat, lequel procédé se caractérise, selon l'invention, en ce que l'abonné engendre lui-même des clés provisoires publique et privée de confidentialité, ainsi qu'un certificat provisoire, qui sont utilisés pour que lui-même transmette à l'Autorité de Certification sa demande de renouvellement de clés de confidentialité, puis pour que l'Autorité de Certification transmette à l'abonné des nouvelles clés définitives publique et privée de confidentialité et le nouveau certificat définitif correspondant.

Ainsi, la sécurité de l'opération de renouvellement repose sur le principe de l'utilisation de clés provisoires, émises par l'abonné, qui sont réservées à cette seule opération. L'ancienne clé privée de l'abonné, qui peut par exemple avoir été compromise, n'intervient plus de façon fonctionnelle.

Bien entendu, la nouvelle clé émise par l'abonné, qui n'a qu'une existence éphémère correspondant exclusivement au transfert de la demande de renouvellement après de l'Autorité de Certification, dans un sens, puis à l'envoi des nouvelles clés définitives émises par l'Autorité de Certification, en retour, ne peut pas servir à d'autres opérations de transfert d'informations avec d'autres abonnés et/ou avec l'Autorité de Certification.

L'invention sera mieux comprise à la lecture de la description détaillée qui suit d'un mode opératoire complet se déroulant conformément à l'invention.

Tout d'abord l'abonné
- engendre lui-même une clé privée provisoire de confidentialité (clé provisoire PRIV PROV_{abonné}) ;
- calcule la clé publique provisoire de confidentialité correspondante (clé provisoire PUB PROV_{abonné}) ;
- calcule le certificat provisoire CERT PROV_{abonné} de cette clé publique provisoire PUB PROV_{abonné} ;
- insère ladite clé publique provisoire PUB PROV_{abonné} dans ledit certificat provisoire CERT PROV_{abonné} qu'il signe lui-même à l'aide de sa clé privée de signature;
- constitue un message groupant ledit certificat et une demande de renouvellement de ses clés de confidentialité, message que l'abonné signe avec sa clé privée de signature et chiffre avec la clé publique de confidentialité de l'Autorité de Certification ;
- enfin envoie ce message à l'Autorité de Certification.

De son côté, à réception du message, l'Autorité de Certification vérifie tout d'abord la validité du message reçu de l'abonné et du certificat provisoire CERT PROV_{abonné}, puis :
- calcule une nouvelle clé privée définitive de confidentialité pour l'abonné (clé PRIV_{abonné}) ;
- calcule la clé publique définitive correspondante (clé PUB_{abonné}) ;
- calcule le certificat définitif (CERT_{abonné}) attaché à cette clé publique ;
- insère la nouvelle clé publique PUB_{abonné} dans le certificat CERT_{abonné} qu'elle signe à l'aide de sa clé privée de signature ;
- constitue un message groupant ledit certificat et la clé privée définitive, message qui est signé de la clé privée de signature de l'Autorité de Certification et qui est chiffré avec la clé publique provisoire de l'abonné PUB PROV_{abonné} ;
- enfin envoie ce message à l'abonné.

A réception, l'abonné vérifie la validité de ce message et du certificat CERT_{abonné}, puis :
- déchiffre la nouvelle clé privée définitive à l'aide de sa clé privée provisoire PRIV PROV_{abonné} ;
- accepte la clé PRIV_{abonné} comme sa nouvelle clé privée de confidentialité ;
- accepte la clé PUB_{abonné} comme sa nouvelle clé publique de confidentialité ;
- et accepte certificat CERT_{abonné} comme son certificat correspondant.

Au cours de ces échanges, les anciennes clés de confidentialité, privée et publique, de l'abonné ne sont pas intervenues, tandis que, grâce à l'émission de clés provisoires par l'abonné, ces échanges conservent malgré tout un niveau de confidentialité souhaité.

## Revendications

1. Procédé de renouvellement, par une Autorité de Certification, de clés de confidentialité d'un abonné qui détient deux clés respectivement publique et privée de confidentialité et deux clés respectivement publique et privée de signature qui lui ont été attribuées par ladite Autorité de Certification, laquelle dispose en outre de ses propres couples de clés publique et privée de confidentialité et de signature, une clé publique ne pouvant être transmise qu'insérée dans un certificat, **caractérisé en ce que** l'abonné engendre lui-même des clés provisoires publique et privée de confidentialité, ainsi qu'un certificat provisoire, qui sont utilisés pour que lui-même transmette à l'Autorité de Certification sa demande de renouvellement de clés de confidentialité, puis pour que l'Autorité de Certification transmette à l'abonné des nouvelles clés définitives publique et privée de confidentialité et le nouveau certificat définitif correspondant.

2. Procédé selon la revendication 1, **caractérisé en ce qu'**il comprend la suite des étapes qui suivent :
1°/ l'abonné
- engendre lui-même une clé privée provisoire PRIV PROV_{abonné} ;
- calcule la clé publique provisoire correspondante PUB PROV_{abonné} ;
- calcule le certificat provisoire CERT PROV_{abonn}é correspondant à cette clé PUB PROV_{abonné} ;
- introduit sa clé publique PUB PROV_{abonné} dans le certificat CERT PROV_{abonné} qu'il signe lui-même à l'aide de sa clé privée de signature ;
- constitue un message groupant ledit certificat et une demande de renouvellement de ses clés de confidentialité, message que l'abonné signe avec sa clé privée de signature et chiffre avec la clé publique de confidentialité de l'Autorité de Certification ;
- enfin, envoie ce message vers l'Autorité de Certification ;
2°/ l'Autorité de Certification, à réception du message :
- calcule une nouvelle clé privée définitive de confidentialité PRIV_{abonné} ;
- calcule la nouvelle clé publique définitive de confidentialité PUB_{abonné} correspondante ;
- calcule le nouveau certificat définitif CERT_{abonné} correspondant ;
- insère la nouvelle clé publique définitive PUB_{abonné} dans le nouveau certificat CERT_{abonné} qu'elle signe à l'aide de sa clé privée de signature ;
- constitue un message groupant ledit certificat et la clé privée définitive PRIV_{abonné}, message qui est signé de la clé privée de signature de l'Autorité de Certification et qui est chiffré sous la clé publique provisoire de l'abonné PUB PROV_{abonné} ;
- puis envoie à l'abonné ledit message ;
3°/ l'abonné, à réception du message :
- déchiffre la nouvelle clé privée de confidentialité PRIV_{abonné} à l'aide de sa clé privée provisoire de confidentialité PRIV PROV_{abonné} ;
- accepte la clé PRIV_{abonné} comme étant sa nouvelle clé privée de confidentialité ;
- accepte la clé PUB_{abonné} comme sa nouvelle clé publique de confidentialité ;
- et accepte CERT_{abonné} comme son nouveau certificat correspondant.

## Claims

1. Method of renewal, by a Certifying Authority, of confidentiality keys of a subscriber who holds two respectively public and private confidentiality keys and two respectively public and private signature keys that have been assigned to him by said Certifying Authority, which also owns its own pairs of public and private confidentiality and signature keys, a public key having to be transmitted only when inserted in a certificate, **characterized in that** the subscriber himself generates provisional public and private confidentiality keys, as well as a provisional certificate, which are used so that he send himself to the Certifying Authority his request for renewal of confidentiality keys, then so that the Certifying Authority transmits to the subscriber new definitive public and private confidentiality keys and the corresponding new definitive certificate.

2. Method according to Claim 1, **characterized in that** it comprises the following series of steps:
1°/ the subscriber
- himself generates a provisional private key PRIV PROV_{subscriber};
- calculates the corresponding provisional public key PUB PROV_{subscriber};
- calculates the provisional certificate CERT PROV_{subscriber} corresponding to this key PUB PROV_{subscriber} ;
- introduces his public key PUB PROV_{subscriber} into the certificate CERT PROV_{subscriber} that he signs himself using his private signature key;
- constructs a message combining said certificate and a request for renewal of his confidentiality keys, a message that the subscriber signs with his private signature key and encrypts with the public confidentiality key of the certifying authority;
- finally, sends this message to the Certifying Authority;
2°/ the Certifying Authority, on receiving the message:
- calculates a new definitive private confidentiality key PRIV_{subscriber};
- calculates the corresponding new definitive public confidentiality key PUB_{subscriber};
- calculates the corresponding new definitive certificate CERT_{subscriber};
- inserts the new definitive public key PUB_{subscriber} into the new certificate CERT_{subscriber} that it signs using its private signature key;
- constructs a message combining said certificate and the definitive private key PRIV_{subscriber}, a message that is signed with the private signature key of the Certifying Authority and that is encrypted under the subscriber's provisional public key PUB PROV_{subscriber};
- then sends said message to the subscriber;
3°/ the subscriber, on receiving the message:
- decrypts the new private confidentiality key PRIV_{subscriber} using his provisional private confidentiality key PRIV PROV_{subscriber};
- accepts the key PRIV_{subscriber} as his new private confidentiality key;
- accepts the key PUB_{subscriber} as his new public confidentiality key;
- and accepts CERT_{subscriber} as his corresponding new certificate.

## Patentansprüche

1. Verfahren zum Erneuern von Geheimschlüsseln eines Teilnehmers mittels einer Zertifizierungsinstanz, wobei der Teilnehmer zwei Geheimschlüssel, öffentlich bzw. privat, und zwei Signaturschlüssel, öffentlich bzw. privat, besitzt, die ihm durch die Zertifizierungsinstanz, welche außerdem über ihre eigenen Paare von öffentlichen und privaten Geheim- und Signaturschlüssel verfügt, zugeordnet worden sind, wobei ein öffentlicher Schlüssel erst übertragen werden kann, wenn er in ein Zertifikat eingetragen wurde, **dadurch gekennzeichnet, dass** der Teilnehmer selbst provisorische, öffentliche und private Geheimschlüssel erzeugt, sowie ein provisorisches Zertifikat, die verwendet werden, damit der Teilnehmer selbst seine Anfrage zum Erneuern von Geheimschlüsseln an die Zertifizierungsinstanz überträgt, damit dann die Zertifizierungsinstanz neue, endgültige, öffentliche und private Geheimschlüssel und das entsprechende, neue, endgültige Zertifikat an den Teilnehmer überträgt.

2. Verfahren nach Patentanspruch 1, **dadurch gekennzeichnet, dass** es die folgenden Schritte umfasst:
1° Der Teilnehmer
- erzeugt selbst einen privaten, provisorischen Schlüssel PRIV PROV_{Teilnehmer};
- berechnet den entsprechenden, öffentlichen, provisorischen Schlüssel PUB PROV_{Teilnehmer};
- berechnet das provisorische Zertifikat CERT PROV_{Teilnehmer}, entsprechend zu diesem Schlüssel PUB PROV_{Teilnehmer};
- gibt seinen öffentlichen Schlüssel PUB PROV_{Teilnehmer} in das Zertifikat CERT PROV_{Teilnehmer} ein, das er selbst mit Hilfe seines privaten Signaturschlüssels signiert;
- erstellt eine Nachricht, die das Zertifikat und eine Anfrage zum Erneuern seiner Geheimschlüssel zusammenfasst, wobei der Teilnehmer die Nachricht mit seinem privaten Signaturschlüssel signiert und mit dem öffentlichen Geheimschlüssel der Zertifizierungsinstanz verschlüsselt;
- schickt schließlich diese Nachricht in Richtung der Zertifizierungsinstanz;
2° Die Zertifizierungsinstanz, bei Empfang der Nachricht:
- berechnet einen neuen, privaten, endgültigen Geheimschlüssel PRIV_{Teilnehmer};
- berechnet den entsprechenden, neuen, öffentlichen, endgültigen Geheimschlüssel PUB_{Teilnehmer};
- berechnet das entsprechende, neue, endgültige Zertifikat CERT_{Teilnehmer};
- trägt den neuen, öffentlichen, endgültigen Schlüssel PUB_{Teilnehmer} in das neue Zertifikat CERT_{Teilnehmer} ein, das sie mit Hilfe ihres privaten Signaturschlüssels signiert;
- erzeugt eine Nachricht, die das Zertifikat und den privaten, endgültigen Schlüssel PRIV_{Teilnehmer} zusammenfasst, wobei die Nachricht vom privaten Signaturschlüssel der Zertifizierungsinstanz signiert wird und unter dem öffentlichen, provisorischen Schlüssel des Teilnehmers PUB PROV_{Teilnehmer} verschlüsselt wird;
- schickt dann die Nachricht an den Teilnehmer;
3° Der Teilnehmer, bei Empfang der Nachricht:
- entschlüsselt den neuen, privaten Geheimschlüssel PRIV_{Teilnehmer} mit Hilfe seines privaten, provisorischen Geheimschlüssels PRIV PROV_{Teilnehmer};
- akzeptiert den Schlüssel PRIV_{Teilnehmer} als seinen neuen, privaten Geheimschlüssel;
- akzeptiert den Schlüssel PUB_{Teilnehmer} als seinen neuen, öffentlichen Geheimschlüssel;
- und akzeptiert CERT_{Teilnehmer} als sein entsprechendes, neues Zertifikat.
